# EUROPEAN PATENT APPLICATION

(11) **EP 4 759 593 A1**
(43) Date of publication of application: **17.06.2026**
(21) Application number: 25222104.9
(22) Date of filing: 10.12.2025
(51) Int. Cl.: B60K 6/30, B60K 6/40, B60K 6/405, B60K 6/485, B60K 6/48

(54) **HYBRID PROPULSION SYSTEM**

(30) Priority: 13.12.2024 IT 202400028470
(71) Applicant: FPT Industrial S.p.A., 10156 Torino (IT)
(72) Inventor: DEL GIUDICE, Davide, 9320 Arbon (CH); PIERRO, Enzo, 10156 Torino (IT); CAVAZZONI, Andrea, 10091 Alpignano (TO) (IT)
(74) Representative: Fiume, Orazio

(57) **Abstract**

Hybrid propulsion system comprising an internal combustion engine (E) equipped with a crankshaft (KS), a flywheel (FL) designed to be permanently attached to said crankshaft (KS), a torsional decoupler (SD, TS) operatively associated with the flywheel (FL) arranged to rotate a shaft (SS) comprising a first end (SS1), fixed in rotation with the torsional decoupler, and a second end (SS2) opposite the first end, fixed in rotation with a bushing (S) connecting to a transmission (TRM), an electric motor (EM) comprising a rotor (RT) operatively connected to said transmission, in which the rotor is operatively fixed to said connecting bushing (S) by means of an elastomeric coupling (EC) and in which the shaft is coaxial with the rotor and passes through a central opening in the rotor.

## Description

### Field of the invention

The present invention relates to the field of hybrid propulsion systems for heavy-duty road and off-road vehicles, including agricultural and construction vehicles, and in particular to the field of hybrid vehicles in which an electric motor has a high inertia rotor and is operatively connected to the rear PTO of the combustion engine at a point upstream of a vehicle transmission.

### State of the art

In hybrid propulsion systems, often a system in which the electric motor is directly connected to the rear PTO of the combustion engine is defined as P1. Therefore, the combustion engine and the electric motor cannot be separated from each other, and the remaining transmission is responsible for rotating the vehicle wheels.

The rear PTO is therefore designed to rotate the transmission and therefore the vehicle wheels. Conversely, the front PTO is designed to rotate the auxiliary belt and therefore, for example, the air conditioning compressor, the alternator, etc.

Hybridizations can be low-voltage or high-voltage. Generally, electric motor supply voltages below 60V are considered low-voltage, while high-voltage hybridizations involve supply voltages greater than 350-400V, up to 1500V. Evidently, in the context of high-voltage hybridization, electric motors have a rotor with greater mass and inertia than motors designed to operate at low voltage, and therefore offer high inertia.

When coupling the internal combustion engine to the electric motor, certain precautions must be taken to limit or eliminate the transmission of torsional, axial, and radial vibrations from the internal combustion engine to the electric motor.

The terms internal combustion engine and internal combustion engine are completely equivalent.

Another problem lies in the fact that both the electric motor rotor and the internal combustion engine crankshaft must be connected to both the flywheel and the remaining transmission.

The mutual connection must be such as not to excessively stiffen the assembly, as this would lead to rapid deterioration.

A torsional decoupler is mandatory to dampen dynamic torque, but it is not sufficient to limit dynamic loads from bending and radial movements on the electric machine rotor. To eliminate dynamic loads from bending and radial and axial movements, a "flex plate" is generally implemented, which is normally placed between the combustion engine crankshaft and the electric machine rotor.

The terms "decoupler" and "damper" are used synonymously to refer to the same device.

The flex plate placed between the crankshaft and the transmission means that the structural characteristics of the flex plate must be capable of damping the axial vibrations that propagate from the crankshaft and must be supported by the transmission.

Axial/bending damping is as necessary as torsional damping to protect the rotor. The rotor must be protected, upstream from vibrations generated by the crankshaft, and downstream from any vibrations generated by the transmission that propagate back toward the rotor.

However, placing two flex plates between the combustion engine and the electric motor rotor, and between the transmission and the electric motor rotor, requires usable space that is not available in certain circumstances. Unless specifically excluded in the detailed description that follows, the contents of this chapter are to be considered as an integral part of the detailed description.

### Summary of the invention

The purpose of this invention is to propose a compact and robust hybrid propulsion system.

The basic idea of this invention is to avoid the direct connection of the electric machine rotor to the torsional decoupler, thanks to a splined shaft coaxial with the rotor and passing through the rotor. The rotor is bolted to a flange located proximal to the gearbox and connected to the splined shaft by an elastomeric coupling.

Therefore, only the rotor benefits from the elastomeric coupling, ensuring a highly compact solution capable of filtering vibrations generated by both the internal combustion engine and the transmission.

Furthermore, a further significant advantage is the fact that the hybridization of a conventional scheme, according to the present invention, becomes plug and play, as it is not necessary to modify the torsional decoupler, which is usually designed and manufactured together with the remaining internal combustion engine, to allow for the aforementioned flange to be bolted.

Therefore, according to the present invention, the following are connected in sequence:
- Crankshaft of the combustion engine,
- Flywheel,
- Torsional damper,
- Splined shaft,
- Elastomeric coupling,
- Rotor of the electric machine.

In other words, only one side of the rotor is connected to the transmission, and the connection is made via an elastomeric coupling.

Advantageously, the torque exchanged between the combustion engine and the transmission does not pass through
- the rotor structure, which therefore needs to be designed only to withstand the torque exchanged between the rotor and the transmission, nor
- the elastomeric coupling, which needs to be designed taking into account only the inertia of the electric machine rotor.

The torsional decoupler upstream of the rotor ensures the radial centering of the rotor itself and simplifies assembly operations.

Advantageously, this solution also maximizes the compactness of the mechanical integration and the modularity of the additional hybrid components compared to the conventional powertrain.

The dependent claims describe preferred variants of the invention, forming an integral part of this specification.

### Brief description of the Figs.

Further purposes and advantages of the present invention will become clear from the following detailed description of an embodiment thereof (and variations thereof) and the accompanying drawings, provided purely for explanatory and non-limiting purposes, in which:
Fig. 1 shows an axial sectional view of a hybridization assembly according to the present invention;
Fig. 2 shows an enlarged detail of Fig. 1;
Fig. 3 shows a schematic view of the connection of the components using the solution in Fig. 1.

The plan views are rectified in the plane to facilitate understanding of the diagrams. In other words, the half-lines described above are made coplanar.

The same reference numbers and letters in the Figs. identify the same elements or components or functions.

It should also be noted that the terms "first," "second," "third," "upper," "lower," and the like may be used here to distinguish various elements. These terms do not imply a spatial, sequential, or hierarchical order for the modified elements unless specifically indicated or implied by the text.

The elements and features illustrated in the various preferred embodiments, including the drawings, may be combined without departing from the scope of protection of this application as described below.

### Detailed description of preferred embodiments

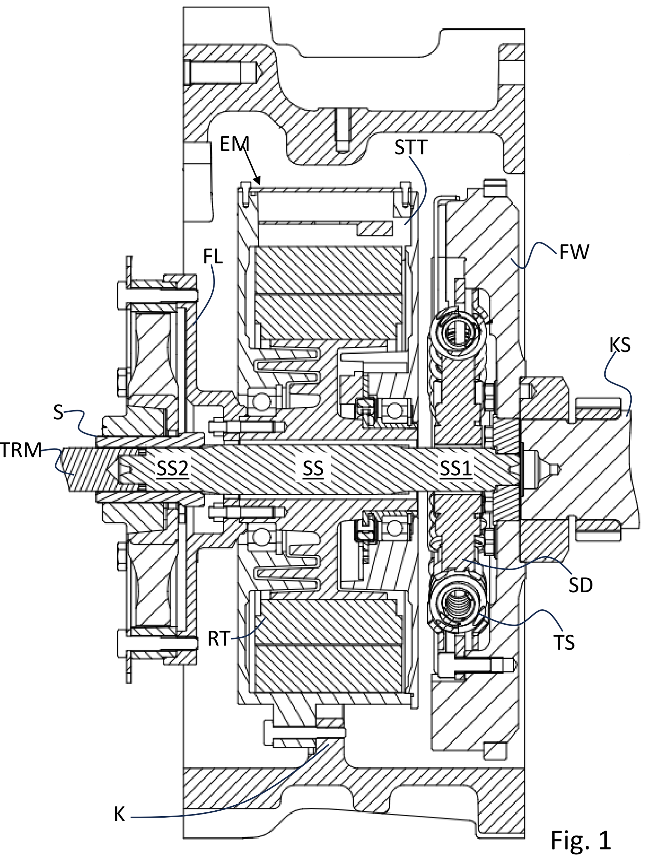

Fig. 1 shows a hybridization scheme according to the present invention.

From the right of the sheet, the crankshaft KS of an internal combustion engine, such as a diesel engine, is shown.

A flywheel FW is directly connected to the crankshaft, which integrates a torsional decoupler SD, TS equipped with a secondary disc SD secured to the flywheel by a plurality of springs TS arranged tangentially, in a manner per se known.

A shaft SS has a first end SS1 and a second end SS2 opposite the first end. The first end is centrally coupled to the secondary disc by a first splined coupling.

The second end SS2 of the shaft is coupled to a bushing S by a splined coupling.

The bushing S is connected to a transmission TRM, only schematically shown in the figure. It may include a discrete gearbox, a hydrostat, etc.

An electric machine EM comprises a rotor RT and a fixed stator STT with an external casing K.

The stator is fixed to a fixed point of the propulsion system, while the rotor is fitted internally to the stator, so that the stator is annular with respect to the rotor. The rotor includes a central opening such that the shaft SS passes through the opening without any mutual interference. An elastomeric coupling EC is fixed to the bushing S, to which a flange FL is bolted, integral with the rotor of the electric machine.

The flange FL is bolted to one face of the rotor; therefore, the rotor interacts with the motor-transmission system only through one of its two opposing faces.

Since the transmission is connected to the flywheel via the shaft SS and the torsional decoupler SD, TS, the elastomeric coupling EC only affects the connection of the electric machine rotor to the engine-transmission system. This means that the addition of this component does not affect the interactions between the transmission TRM and the torsional decoupler SD, TS as originally conceived before the hybridization of the propulsion system. In fact, the transmission and the torsional decoupler are interconnected only via the SS shaft and the S bushing.

The elastomeric coupling is therefore connected to the torsional decoupler SD, TS indirectly, via the bushing S and the shaft SS.

The elastomeric coupling preferably has a linear elastic characteristic, ideal for diesel engine transmissions. Furthermore, it preferably features an axial connection for easy installation and removal.

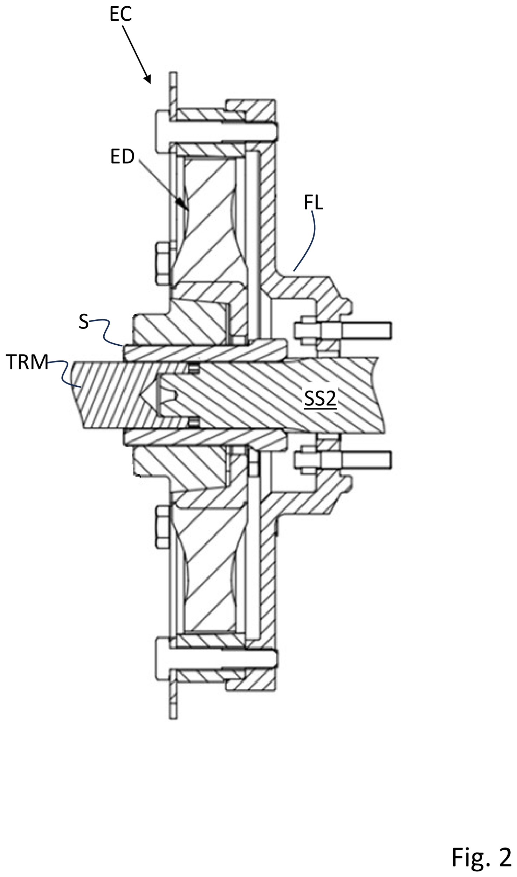

Fig. 2 shows an enlargement of the EC elastomeric coupling shown in Fig. 1.

The bushing S is clearly visible, partially fitting onto a shaft TRMS, which defines the primary shaft of the transmission TRM, and partially fitting onto the second end SS2 of the shaft SS.

An elastomeric disk ED is fixed to the bushing, to which the flange FL is bolted around the perimeter.

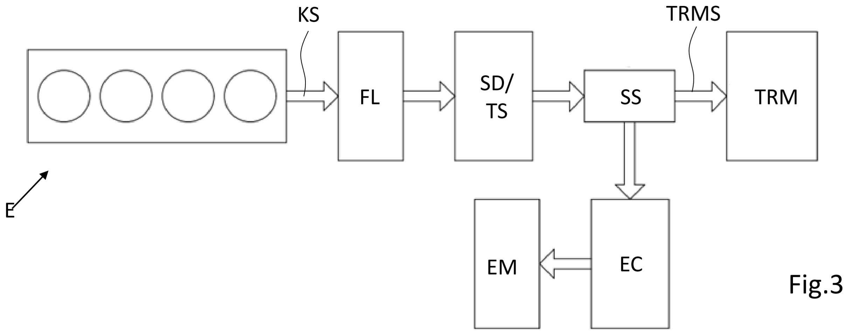

Fig. 3 helps to understand that the transmission and the electric motor are connected in series with respect to the splined shaft. Furthermore, the elastomeric coupling EC is interposed, in terms of torque transfer, between the splined shaft and the rotor of the electric machine, without being affected in any way by the torque transfers between the internal combustion engine and the transmission.

Implementation variations to the non-limiting example described are possible, without departing from the scope of protection of the present invention, including all embodiments that, for a person skilled in the art, are equivalent to the content of the claims.

From the above description, the person skilled in the art is able to realize the object of the invention without introducing further construction details.

## Claims

1. Hybrid propulsion system comprising
- an internal combustion engine (E) equipped with a crankshaft (KS),
- a flywheel (FL) permanently attached to said crankshaft (KS),
- a torsional decoupler (SD, TS) operatively associated with the flywheel (FL) arranged to drive it in rotation
- a shaft (SS) comprising a first end (SS1), fixed in rotation with the torsional decoupler, and a second end (SS2) opposite the first end, fixed in rotation with a bushing (S) connecting to a transmission (TRM),
- an electric motor (EM) comprising a rotor (RT) operatively connected to said transmission,
in which the rotor is operatively fixed to said connecting bushing (S) by means of an elastomeric coupling (EC) and in which the shaft (SS) is coaxial with the rotor and passes through a central opening in the rotor.

2. System according to claim 1, wherein the shaft passes through the central opening of the rotor without mutual interference, so that the rotor is connected to the bushing exclusively via said elastomeric coupling.

3. System according to claim 1 or 2, wherein said first end (SS1) of the shaft is associated with the torsional decoupler by means of a splined coupling.

4. System according to any of claims 1-3, wherein said second end (SS2) of the shaft is associated with the connecting bushing (S) by means of a splined coupling.

5. System according to any of claims 1-4, wherein the electric motor is high-voltage, with a supply voltage greater than 60V and preferably greater than 350V.

6. A system according to any of claims 1-5, wherein said elastomeric coupling (EC) comprises an elastomeric disk (ED), to which a flange (FL) fixed to the rotor (RT) of the electric machine is bolted, around its perimeter.

7. A system according to any of the preceding claims, wherein said transmission comprises a primary shaft (TRMS) and wherein said connecting bushing (S) fits partially onto said primary shaft and partially onto said second end (SS2) of the shaft (SS).

8. A land vehicle comprising the hybrid propulsion system according to any of the preceding claims.
